# EUROPEAN PATENT SPECIFICATION

(11) **EP 3 205 890 B1**
(45) Date of publication and mention of the grant of the patent: **03.10.2018**
(21) Application number: 17152894.6
(22) Date of filing: 24.01.2017
(51) Int. Cl.: F15B 13/07, F15B 13/042, F16K 11/07

(54) **PILOTED FLOW DIVERTER VALVE**
GESTEUERTES STRÖMUNGSUMLENKERVENTIL
SOUPAPE PILOTÉE DE DÉRIVATION D'ÉCOULEMENT

(30) Priority: 15.02.2016 IT UB20160750
(43) Date of publication of application: 16.08.2017
(73) Proprietor: Atlantic Fluid Tech S.r.l., 41018 San Cesario sul Panaro (MO) (IT)
(72) Inventor: STORCI, Christian, 41121 Modena (IT)
(74) Representative: Villanova, Massimo

(56) References cited:
- EP-A1- 0 206 934
- DE-A1- 1 926 237
- US-A- 2 754 018
- US-A- 4 215 622
- US-A1- 2002 130 547

## Description

The invention relates to a flow diverter valve arranged for switching the flow of an operating fluid between different actuators connected to the valve.

Flow diverter valves are known in the art, the use of which is for example very widespread in the sector of earth-moving machines.

For example, a flow diverter valve can be mounted on the articulated arm of an excavator and connected to a bucket cylinder (first actuator) and to an actuator that drives a tool (second actuator), such as a demolition hammer.

In use, owing to the presence of the flow diverter valve, the operator can choose which actuator to supply according to the operations to be performed.

Prior art diverter valves are known from documents DE 1926237 A1, US 4215622 A, US 2002/130547 A1. The diverter valves known in the art comprise a spool in which a plurality of passages are made for the pressurised operating fluid.

The spool can take two positions alternatively. In a first position of the spool a supplying port and a discharge port of the valve are placed in flowing communication (through the aforesaid passages) with a first pair of ports connected to the first actuator. In a second position of the spool the plurality of passages obtained therein connect the supplying port and the discharge port to a second pair of ports connected to the second actuator.

The diverter valves known in the art can comprise a solenoid valve that enables the spool to be moved between the first and the second position.

Very often, as in the case of the example mentioned above, these valves are used in applications in which, in order to provide the required performances, they operate at high operating fluid flow rates at very high pressures. In particular, the operating fluid can also reach flow rates of 400 litres per minute and operating pressures of about 400 bar.

It will be understood that the solenoid valve thus has to have a significant power because otherwise it would not be able to overcome the hydraulic resistance opposed by the operating fluid and thus the spool cannot be moved from one position to another.

A drawback of these diverter valves is that they are very bulky and expensive because the solenoid valve has significant dimensions and high costs. The dimensions and the costs of the solenoid valve are substantially proportional to the power thereof and thus this drawback is in particular apparent for high performance valves.

In order to overcome this drawback, the prior art further comprises also flow diverter valves that are devoid of the solenoid valve that acts directly on the spool.

These diverter valves of known type comprise a oleodynamic piloting system that enables the spool to be moved. The piloting system, which is known in the art, enables a supplementary pressurized fluid to be introduced into the valve. The additional pressurized fluid, also known as piloting fluid, presses directly on the spool to move it from the first position to the second position (or vice versa). The diverter valves comprise, in addition to the piloting system, also an elastic element (coil spring) that acts in opposition to the piloting system. The elastic element enables the spool to be brought back from the second position to the first position (or vice versa) when the piloting step has ceased and the piloting fluid is no longer being introduced into the valve. In order to be able to move the spool, in view of the aforesaid high operating pressures, the piloting system generally operates at high piloting fluid pressures, which can even reach 20 bar. These diverter valves are less costly than the foregoing ones owing to the absence of the solenoid valve acting directly on the spool to move it between one position and the other. Nevertheless, also these valves have the drawback of being bulky and they are further structurally complicated.

In fact, the piloting system involves an increase in both the overall dimensions of the valve and of the structural complexity thereof.

Moreover, these valves are anyway sufficiently costly to be able to ensure the high performances required in terms of flow rate and pressure. For example, the valve components have to be made of materials of good quality, through precise and accurate processings, and be sized so as to be able to stand the high operating pressures.

An object of the invention is to improve the flow diverter valves that are known in the art. Another object is to make available a flow diverter valve having a structure that is simple and thus less complex than that of the valves that are known in the art.

A further object is to make available a valve that in use is extremely reliable, in particular even when the valve is traversed by large flow rates of operating fluid at high pressures. Yet another object is to make available a compact valve that has overall dimensions that are more reduced than the flow diverter valves that are known in the art.

According to the invention, a flow diverter valve is provided, as defined in claim 1.

The invention will be better understood and implemented with reference to the attached drawings, which illustrate an embodiment thereof by way of non-limiting example, in which:
Figure 1 is a schematic view of a flow diverter valve according to the invention, shown in a first configuration in which it supplies a first actuator,
Figure 2 is a view like that of Figure 1, in which the flow diverter valve according to the invention is shown in a second configuration in which it supplies a second actuator,
Figure 3 is a section of the valve taken along the section plane III-III of Figure 1,
Figure 4 is another section of the valve taken along the section plane IV-IV of Figure 1,
Figure 5 is a schematic partial view of a portion of the valve according to the invention, in which a version is shown of a locking device comprised in the valve.

With reference to the Figures, with 1 a flow diverter valve is altogether indicated that is arranged for switching the flow of a pressurised operating fluid between different actuators associated therewith.

In the shown embodiment, the valve 1 is connected to two actuators, indicated respectively by 10 and 20. The actuators can be optionally oleodynamic actuators, such as, for example, a dual-effect cylinder-piston assembly. It is understood that in other embodiments, the actuators, which are not part of the valve according to the invention, can be of other types, such as for example pneumatic actuators or electric actuators.

The valve 1 comprises an inlet port P1 and a discharge port P2. These ports are configured for being respectively connected to supplying means, for example a pump, and to a collecting means, for example a tank, which are not shown. In particular, the inlet port and the discharge port can be connected to a distributing valve (not shown), which is in turn connected to the supplying and connecting means.

The valve 1 further comprises at least two pairs of ports, indicated with C1, C4, C2 and C3. A first pair of ports, for example indicated by C2 and C3, is connected to the first actuator 10, in which one port is the delivery port for delivering the operating fluid to the actuator 10, and the other port is the return port (to the valve) of the fluid (exiting) from the first actuator 10. Similarly, a second pair of ports, for example indicated by C1 and C4, is connected to the second actuator 20, in which one port is the delivery port for delivering the operating fluid to the actuator 20, and the other port is the return port (to the valve) of the fluid (exiting) from the second actuator 20.

In this embodiment, so as it is illustrated in the attached Figures, the flow diverter valve 1 according to the invention is thus configured as a six-way and two-position valve (6-2 valve).

It is understood that, in other embodiments, the valve 1 can also comprise a number of pairs of ports connected to respective actuators which is greater than two, for example three or four pairs of ports. In these other embodiments, the valve according to the invention can thus be respectively configured as an eight-way and two-position valve (8-2 valve) connected to three actuators, or as a ten-way and two-position valve (10-2 valve) connected to four actuators.

As it will be explained better below, in use, only one pair of ports at a time is flowingly connected to the inlet port P1 and the discharge port P2. Thus if the connection has opened between the latter and the second pair of ports C1, C4, simultaneously the connection is closed between the inlet and discharge ports P1, P2 and the first pair of ports C2, C3, or vice versa.

The flow diverter valve 1 comprises a spool 2 and piloting means 8 that can be selectively activated to move the spool 2, as it will be explained in greater detail below.

The piloting means 8 comprises an electromagnetically driven two-way and two-position piloting valve, of a type known in the art.

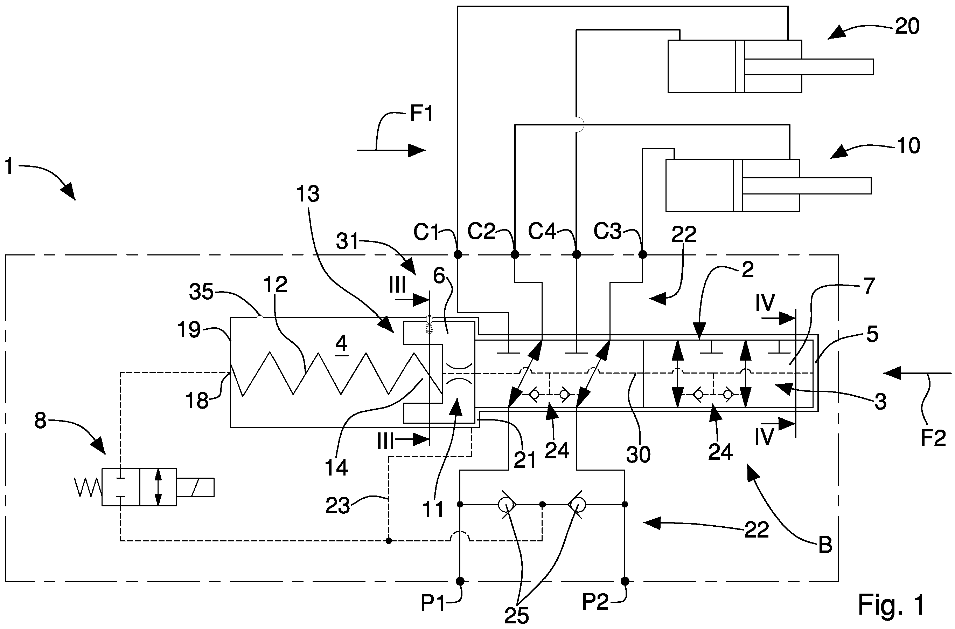

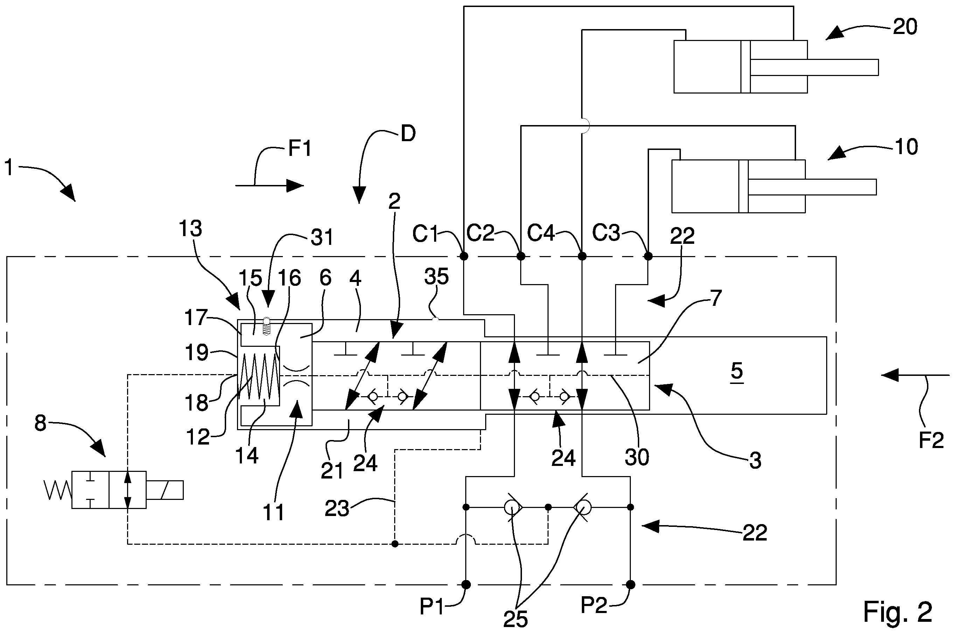

The spool 2 is movable between a first operating configuration B (visible in Figure 1), in which it places the inlet and discharge ports P1, P2 in communication with the first pair of ports C2-C3, and a second operating configuration D (visible in Figure 2), in which it places the inlet and discharge ports P1, P2 in communication with the second pair of ports C1-C4.

In the spool 2 a plurality of passages are made, altogether indicated by the number 3, and that are arranged for being traversed by the operating fluid.

The valve 1 comprises a plurality of conduits 22, each of which connects a respective port of the valve 1 to the passages 3. The operating fluid entering, or exiting from, the inlet and discharge ports P1, P2 and the pairs of ports C2-C3, C1-C4 flows through a respective conduit 22 to reach the passages 3. The position into which each conduit of the plurality of conduits 22 leads is a preset position and such as to cause a passage of the plurality of passages 3 made in the spool 2 to face a respective conduit in both the operating configurations B, D of the spool 2.

Owing to the conduits 22 and the passages 3, the inlet and discharge ports P1, P2 can be alternatively connected to the first pair of ports C1, C4 or to the second pair of ports C2, C3.

The plurality of passages 3 comprises a main conduit 30 arranged for leading the pressurised operating fluid into a first chamber 4 and a second chamber 5. The main conduit 30 extends longitudinally substantially over the entire length of the spool 2 so as to lead, on one side, into the first chamber 4, and, on the other side, into the second chamber 5. The plurality of passages 3 comprises an arrangement of conduits that are configured in such a manner as to connect the main conduit 30 to all the ports of the valve 1, i.e. to the inlet and discharge ports P1 and P2 and to the pairs of ports C1-C4 and C2-C3.

The first chamber 4 and the second chamber 5, which are intended to be filled by the operating fluid, are variable volume chambers. The first chamber 4 and the second chamber 5 are defined by opposite sides of the spool 2. The spool 2 thus comprises a first end 6 that faces the first chamber 4, and a second end 7, opposite the first end 6, which faces the second chamber 5.

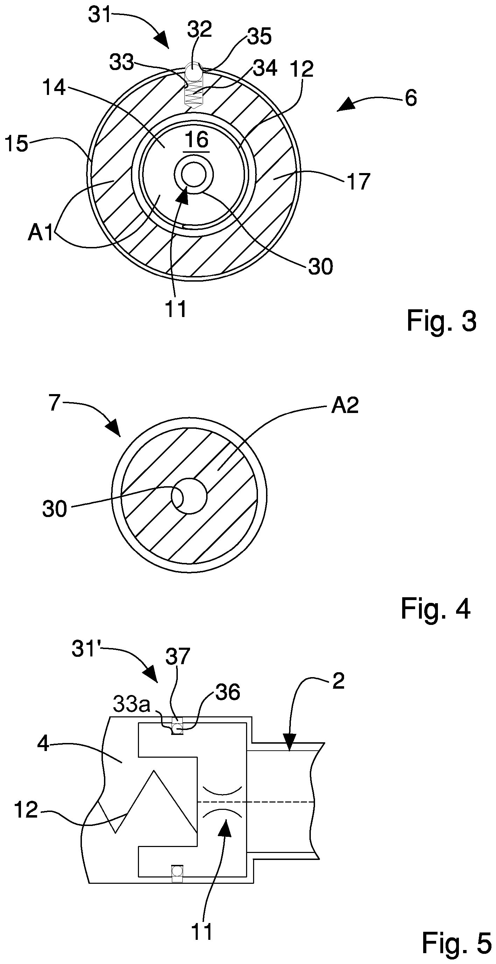

As visible better in Figures 3 and 4, the first end 6 has a first frontal area A1 exposed to the thrust force F1 of the operating fluid present in the first chamber 4, which area is greater than a second frontal area A2 of the second end 7 exposed to the thrust force F2 of the operating fluid present in the second chamber 5.

Owing to this difference between the first frontal area A1 and the second frontal area A2, the spool 2 moves towards the second chamber 5 when the piloting means 8 is not active to take the first operating configuration B. In fact, as it will be explained better below, the spool 2 is subject to the thrust action of the operating fluid that fills the two chambers 4, 5. Nevertheless, as the pressure of the operating fluid in the two chambers 4, 5 is the same, it is clear that the thrust force of the operating fluid is directly proportional to the areas of the spool 2 facing the chambers 4, 5. Consequently, as the first frontal area A1 is greater than the second frontal area A2, the thrust force F1 that the operating fluid present in the first chamber 4 exerts on the spool 2 is greater than the opposite thrust force F2 that the operating fluid present in the second chamber 5 exerts on the spool 2.

The flow diverter valve 1 comprises means for creating a drop in the pressure of the operating fluid, which means is indicated by the number 11. The means for creating a pressure drop 11 is positioned along the path of the operating fluid directed to the first chamber 4, in a position upstream of the first chamber 4. The piloting means 8 is positioned along the path of the operating fluid exiting from the first chamber 4 and thus in a position downstream of the latter.

The means for creating a pressure drop 11 is arranged for generating a drop in the pressure of the operating fluid that is greater than the pressure drop generated by the piloting means 8, so that the flow rate of operating fluid exiting from the first chamber 4 is greater than the flow rate of operating fluid entering the first chamber 4, in such a way that the thrust force F2 of the operating fluid present in the second chamber 5 exceeds the thrust force F1 of the operating fluid present in the first chamber 4 and the spool 2 moves to the first chamber 4 when the piloting means 8 is active to lead the spool 2 to take the second operating configuration D.

The means for creating a pressure drop 11 can be configured as a narrowing of the passage section of the operating fluid through the main conduit 30. For example, the means for creating a pressure drop 11 can be configured as a bead positioned in the main conduit 30 at the first end 6 of the spool 2.

The flow diverter valve 1 can further comprise elastic means 12, for example configured as a coil spring, which is housed in the first chamber 4. The elastic means 12 is in contact with the first end 6 to exert a thrust action on the first frontal area A1. Thus the elastic means 12 exerts an elastic force concordant with the first thrust force F1 that the operating fluid present in the first chamber 4 exerts on the first thrust area of the spool 2. It should be noted that the presence of the elastic means 12 is not essential for the correct operation of the valve. In one embodiment that is not shown, the valve 1 can be devoid of the elastic means 12.

In fact, the flow diverter valve 1 is able to move from the second operating configuration D to the first operating configuration B only owing to the first thrust force F1 that exceeds the second thrust force F2, opposed thereto, owing to the fact that the first thrust area A1 is greater than the second thrust area A2.

Nevertheless, the elastic means 12 assists the operating fluid present in the first chamber 4 in the thrust action thereof on the spool 2. In fact, as often the flow diverter valve 1 is mounted on an articulated arm of an excavator, the flow diverter valve 1 can be naturally oriented in the space according to the most disparate tilts. For this reason, it may occur that, when the valve 1 is arranged according to certain tilts in which a significant component of the force of gravity opposes the first thrust force F1, the spool 2 is not able to move from the second operating configuration D to the first operating configuration B without the help of the elastic force exerted by the elastic means 12. In other words, when the valve 1 is tilted in a certain manner, the first thrust force F1 is not able to overcome, alone, the forces opposing the first thrust force F1, i.e. the second thrust force F2 and the force of gravity.

The elastic means 12 is positioned in such a manner as to be able to exert an elastic thrust force substantially parallel and concordant with the first thrust force F1.

In order to maintain the elastic means 12 in the correct position, the first end 6 of the spool 2 can be suitably shaped in such a manner as to define housing means 13 of the elastic means 12.

In other embodiments, the housing means 13 of the elastic means 12 is not integrated as a single body with the first end 6 of the spool 2 and thus the first end 6 and the housing means 13 can be shaped differently from the embodiment illustrated and disclosed below. The housing means 13 can comprise an open cavity 14, having the opening that faces the first chamber 4. The open cavity 14 is bounded laterally by an annular projection 15 and behind by a bottom wall 16, for example of circular shape. The annular projection 15 projects from the bottom wall 16 to the first chamber 4 and ends with a front wall 17 shaped as an annular crown. The annular projection 15 is positioned radially outside the bottom wall 16 so that the annular projection 15 surrounds the bottom wall 16. The elastic means 12 contacts, and presses on, the bottom wall 16. The annular projection 15 contains laterally the elastic means 12 at least for a portion of the longitudinal extent thereof. In other words, the end of the elastic means 12 closest to the spool 2 is received inside the open cavity 14. Moreover, the main conduit 30 leads onto the bottom wall 16. It should be noted that the overall extent of the first thrust area A1 is given by the sum of the extent of the front wall 17 and of the extent of the bottom wall 16.

In the first chamber 4 a piloting port 18 is obtained through which the operating fluid present in the first chamber 4 can reach the piloting means 8. The piloting port 18 opens optionally on an end wall 19 of the first chamber 4, substantially parallel to the bottom wall 16.

The flow diverter valve 1 comprises a locking device 31, 31' configured for maintaining the spool 2 locked when it is positioned in the first and in the second operating configuration B and D.

The locking device 31, 31' thus has a safety function. In fact, the locking device 31, 31' maintains the spool 2 in the expected position and prevents the pressure of the fluid in the chambers 4, 5 and the elastic force of the elastic means 12 from moving the spool 2 so as to move the spool 2 away from the (end stroke) position that it adopts in the second operating configuration B, D.

In the illustrated embodiments, the locking device 31, 31' is associated with the annular projection 15. It is nevertheless understood that the locking device 31, 31' can be made in any portion of the spool 2, i.e., for example, also in the portion with a lesser diameter adjacent to the second chamber 5. In this case, in order to ensure the correct operation of the locking device 31, 31', it is advisable to arrange the locking device 31, 31' in such a position that it does not interfere with either the ports C1-C4, or with the plurality of passages 3.

In the embodiment illustrated in Figures 3 and 4, the locking device 31 comprises a spherical element 32, received in a hole 33 made on an outer wall of the spool 2, and an elastic element 34 (for example a coil spring) received in the same hole 33 to press on the spherical element 32. When the spool 2 reaches the first operating configuration B and the second operating configuration D, the hole 33 faces a respective seat 35, of substantially hemispherical shape. The elastic element 34, which presses on the spherical element 32, pushes the latter into the seat 35. In this manner, when the spool 2 is in the first and in the second operating configurations B and D, the spherical element 32 is at the same time housed partially in the hole 33 and partially in the seat 35. Accordingly, the spherical element 32 acts as a mechanical stop that prevents the spool 2 from moving from the first or the second operating configuration B, D.

In an alternative embodiment, which is not shown, only one seat 35 can be provided that is made in a position that is such as to face the hole 33 when the spool 2 is in the first operating configuration B or when it is in the second operating configuration D. It is clear that in this embodiment the spool 2 is maintained locked by the locking device 31 only in one of the aforesaid operating configurations.

With reference to Figure 5, another embodiment of the locking device is visible, which is indicated altogether by the reference number 31'.

In this embodiment, the locking device 31' comprises an assembly made of a seal element 36, for example configured as an "O-ring", and of a contact element 37 configured for contacting the walls of the first chamber 4.

The seal element 36 is received in a groove 33a made on an outer wall of the spool 2. The contact element 37, having a substantially annular shape, is partially received inside the groove 33a, whilst a portion of this element projects outside the groove 33a to the walls of the first chamber 4.

The contact element 37, during the movement of the spool between the first and the second operating configuration B, D, drags against the walls of the first chamber 4. Accordingly, it is preferable that the contact element 37 be made of a suitable material characterised by low sliding friction, such as for example PTFE.

In operating configurations B and D, in which the spool 2 is stationary in an end stroke position, the seal element 36 presses on the contact element 37 so that the latter is compressed against the walls of the first chamber 4. In this manner, the contact element 37 acts as a safety mechanical stop that prevents the spool 2 from moving from the first or from the second operating configuration B, D.

The flow diverter valve 1 further comprises a draining chamber 21 that is adjacent to the first end 6. In particular, the draining chamber 21 is positioned adjacent to the first end 6 on the side opposite the first chamber 4. The first end 6 thus sealingly separates the first chamber 4 from the draining chamber 21. For this purpose, the first end 6 can be provided with sealing means (which is not shown), such as for example an O-ring. The draining chamber 21 is a chamber with a volume variable between a minimum volume, substantially nil, when the spool 2 is in the first operating configuration B, and a maximum volume when the spool 2 is in the second operating configuration D. In use, the volume of the draining chamber 21 is complementary to the volume of the first chamber 4.

In order to ensure the correct operation of the valve 1, it is clear that no operating fluid must be present in the draining chamber 21, In fact, any pressurised operating fluid in the draining chamber 21 would exert a pressure on the first end 6 that generates a force that opposes the first thrust force F1 and is concordant with second thrust force F2. Accordingly, the presence of pressurised operating fluid in the draining chamber 21 may prevent the spool 2 from moving from the second operating configuration D to the first operating configuration B.

In order to drain the draining chamber 21 the flow diverter valve 1 comprises draining means 23, arranged for placing the draining chamber 21 in communication with the discharge port P2 so as to drain to the latter possible operating fluid present in the draining chamber 21. Owing to the draining means 23, the operating fluid does not accumulate in the central chamber 21.

The flow diverter valve 1 comprises a plurality of non-return valves 24 associated with the main conduit 30 to enable the operating fluid to lead into the main conduit 30 and prevent the operating fluid flowing back to the port through which it entered the valve. This port can be the inlet port P1 or one of the ports of the two pairs of ports C2-C3, C1-C4, i.e. the port from which the operating fluid returns to the valve 1 from the actuator 10, 20.

The flow diverter valve 1 further comprises further non-return valves 25 associated with the plurality of conduits 22. In particular, the further non-return valves 25 are associated with the conduits 22 associated with the inlet and discharge ports P1, P2 so that the operating fluid directed to the discharge port does not flow back to the inlet port.

The operation of a flow diverter valve 1 according to the invention is disclosed below.

When the piloting means 8 is not active, the spool 2 is in the first operating configuration B, owing to the greater first thrust force F1 exerted on the spool 2 by the operating fluid present in the first chamber 4 with respect to the (lesser) second thrust force F2 exerted on the spool 2 by the operating fluid present in the second chamber 5. This is due to the fact that the first frontal area A1 is greater than the second frontal area A2, as disclosed previously.

In the first operating configuration B the operating fluid enters the valve 1 from the inlet port P1, goes along a conduit 22 and enters the plurality of passages 3 of the spool 2. From the passages 3, a portion of operating fluid reaches the first chamber 4 and the second chamber 5 through the main conduit 30, whilst another portion of operating fluid enters another conduit 22 before exiting the valve 1 through the port C2. From the port C2 the operating fluid reaches the first actuator 10 to drive it. From the first actuator 10, configured as a dual-effect cylinder, a portion of operating fluid returns to the valve 1, entering the latter through the port C3. From the port C3 the operating fluid goes along a conduit 22, enters one of the passages 3 of the spool 2 and goes along another conduit 22 before exiting the valve 1 through the discharge port P2.

When it is desired to switch the flow of operating fluid from the first actuator 10 to the second actuator 20, the piloting means 8 is driven.

When the piloting means 8 is driven, the solenoid valve is excited and takes the piloting means 8 from the closed position, shown in Figure 1, to the open position visible in Figure 2.

In this position, the piloting means 8 is traversed by the operating fluid, which leaves the first chamber 4 through the piloting port 18 to move towards the discharge port P2 after traversing the piloting means 8.

The first chamber 4 continues to be supplied by operating fluid, which enters therein through the main conduit 30. Nevertheless, owing to the presence of the means for the pressure drop 11 arranged upstream of the first chamber 4, the first chamber 4 is supplied with a flow rate of operating fluid that is less than the flow rate of operating fluid exiting from the first chamber 4 through the piloting port 18.

Accordingly, the modulus of the first thrust force F1 decreases significantly and the second thrust force F2 is able to overcome the forces opposing the second thrust force F2, i.e. the elastic force exerted by the elastic means 12 and the first thrust force F1.

This causes the spool 2 to go to the second operating configuration D, shown in Figure 2. Also in the second operating configuration D the operating fluid that enters the valve 1 from the inlet port P1, goes along a conduit 22 and enters the plurality of passages 3 of the spool 2. From the passages 3, a portion of operating fluid reaches the first chamber 4 and the second chamber 5 through the main conduit 30, whilst another portion of operating fluid enters another conduit 22 that brings the operating fluid to the port C1, from which it exits the valve 1 to reach and drive the second actuator 20. From the second actuator 20, configured as a dual-effect cylinder, a portion of operating fluid returns to the valve 1, entering the latter through the port C4. From the port C4 the operating fluid goes along a conduit 22, enters one of the passages 3 of the spool 2 and goes along another conduit 22 before exiting the valve 1 through the discharge port P2.

Owing to the invention a flow diverter valve 1 is made available that is able to switch the flow of an operating fluid between two or more actuators connected to the valve reliably and efficiently even when the flow diverter valve 1 is traversed by high flow rates of operating fluid at high-pressure.

An advantage of the flow diverter valve 1 according to the invention is that of incorporating piloting means 8 that, being configured as an electromagnetically driven two-way and two-position valve, does not cause an increase in costs and in the overall dimensions of the valve 1. The electromagnetically driven two-way and two-position valve in fact has a simple structure and is sufficiently inexpensive. A considerable part of the cost of this valve is given by the presence of the solenoid valve, which nevertheless does not have to have a high power because the piloting means 8 is traversed by a low flow rate of fluid directed to the discharge port P2. Accordingly, the solenoid valve can also be rather cheap. It will be understood how this solenoid valve is certainly less costly (and much less powerful) than solenoid valves that, in flow diverter valves of known type, act directly on the spool to command the movement thereof.

Another advantage of the flow diverter valve 1 according to the invention is that of having a simple and effective operation.

Owing to the arrangement inside the valve, according to which the means for creating a pressure drop 11 and piloting means 8 are arranged respectively upstream or downstream of the first chamber 4, in this latter chamber a significant pressure drop is caused that enables the spool 2 to go from the first operating configuration B to the second operating configuration D when the piloting means 8 is active (in the open position in Figure 2).

It should be noted that, generally, during the piloting step of a valve, inside the valve a certain quantity of pressurised piloting fluid is introduced that presses on a movable element (for example the spool) to take it to the desired position.

On the contrary, the piloting means 8 of the valve 1 according to the invention does not introduce any pressurised fluid inside the valve, but instead enables the pressurised fluid to exit the valve.

This implies the advantage, over the piloting systems known in the art, of having a lower consumption of pressurised fluid with a consequent reduction in running costs.

It should further be noted that, owing to the piloting means 8, the second chamber 5 can be devoid of elastic means configured for operating in opposition to the piloting means 8. In other words, no elastic means is necessary to take the spool 2 to the second operating configuration D during the piloting step.

## Claims

1. Flow diverter valve (1) comprising:
- an inlet port (P1) and a discharge port (P2) configured for being respectively connected to supplying means and to collecting means of an operating fluid,
- at least two pairs of ports (C1, C4; C2, C3) intended for being connected to respective actuators (10, 20), wherein only one pair of ports at a time is flowingly connected to said inlet port (P1) and said discharge port (P2),
- a spool (2) in which a plurality of passages (3) are made that are arranged for being traversed by the operating fluid and configured for placing in communication said inlet (P1) and discharge (P2) ports alternatively with the one or the other pair of ports of said at least two pairs of ports (C1, C4; C2, C3),
- piloting means (8) that can be selectively activated for moving said spool (2), **characterized in that** said plurality of passages (3) comprise a main conduit (30) arranged for leading the operating fluid at least to a first chamber (4) and a second chamber (5), wherein a first end (6) of said spool (2) faces said first chamber (4) and a second end (7) of said spool (2), opposite said first end (6), faces said second chamber (5), and said first end (6) has a first frontal area (A1) exposed to a first thrust force (F1) of the operating fluid that can be present in said first chamber (4) that is greater than a second frontal area (A2) of said second end (7) exposed to a second thrust force (F2) of the operating fluid that can be present in said second chamber (5), so that when said piloting means (8) is not active, said spool (2) moves to said second chamber (5).

2. Valve (1) according to claim 1, comprising means for creating a pressure drop (11) of said operating fluid positioned along the path of the operating fluid directed towards said first chamber (4) in a position upstream of said first chamber (4).

3. Valve according to claim 2, wherein said means for creating a pressure drop (11) of said operating fluid is arranged for generating a pressure drop of the operating fluid that is greater than the pressure drop generated by said piloting means (8), so that the flow rate of operating fluid exiting said first chamber (4) is greater than the flow rate of operating fluid entering said first chamber (4) in such a manner that the second thrust force (F2) of the operating fluid that is present in said second chamber (5) exceeds the first thrust force (F1) of the operating fluid that is present in said first chamber (4) and said spool (2) moves to said first chamber (4) when said piloting means (8) is active.

4. Valve according to claim 2, or 3, wherein said means for creating a pressure drop (11) of said operating fluid is configured as a narrowing of the passage section of the operating fluid through said main conduit (30).

5. Valve according to any preceding claim, wherein in said first chamber (4) a piloting port (18) is obtained through which the operating fluid in said first chamber (4) can reach said piloting means (8).

6. Valve according to any preceding claim, wherein said piloting means (8) comprises an electromagnetically driven two-way and two-position piloting valve.

7. Valve according to any preceding claim, comprising elastic means (12) that is housed in said first chamber (4) in contact with said first end (6) to exert a thrust action on said first frontal area (A1).

8. Valve according to any preceding claim, comprising a plurality of conduits (22), each connecting one port of said inlet and discharge ports (PI, P2) and said at least two pairs of ports (C1, C4; C2, C3) with said plurality of passages (3).

9. Valve according to claim 8, comprising draining means (23) arranged for placing a draining chamber (21) in communication with said discharge port (P2) so as to drain to said discharge port (P2) any operating fluid that is present in said draining chamber (21).

10. Valve according to any one of claims 7 to 9, comprising a locking device (31; 31') configured for maintaining said spool (2) locked when said spool (2) is positioned in a first operating configuration (B) and in a second operating configuration (D), wherein said locking device (31; 31') maintains said spool (2) in the expected position and prevents that the pressure of the fluid in said first and second chambers (4, 5) and the elastic force of said elastic means (12) acting on said spool (2) move said spool (2) away from the position that said spool (2) takes respectively in said first operating configuration (B) and in said second operating configuration (D).

11. Valve according to any one of claims 1 to 6, or according to claim 8, or 9, wherein said second chamber (5) is devoid of elastic means configured for operating in opposition to said piloting means (8).

## Patentansprüche

1. Strömungsumlenkventil (1), welches aufweist:
- eine Einlassöffnung (P1) und eine Auslassöffnung (P2), die so ausgestaltet sind, dass sie jeweils mit einer Zuführeinrichtung und einer Sammeleinrichtung eines Arbeitsfluides verbunden sind;
- mindestens zwei Paare an Anschlüssen (C1, C4; C2, C3), die zur Verbindung mit jeweiligen Stellgliedern (10, 20) bestimmt sind, wobei jeweils nur ein Paar der Anschlüsse mit der Einlassöffnung (P1) und der Auslassöffnung (P2) fließend verbunden ist,
- eine Spule (2), in der eine Vielzahl an Durchgängen (3) ausgebildet sind, die so angeordnet sind, dass sie von dem Arbeitsfluid durchflossen werden, und die so ausgestaltet sind, dass sie in der Kommunikation mit der Einlassöffnung (P1) und der Auslassöffnung (P2) mit dem einen oder dem ein anderes Paar der Anschlüsse der mindestens zwei Paare der Anschlüsse (C1, C4; C2, C3) angeordnet sind,
- ein Steuerungsmittel (8), das zum Bewegen der Spule (2) selektiv aktiviert werden kann, **dadurch gekennzeichnet, dass** die Vielzahl an Durchlässen (3) eine Hauptleitung (30) aufweist, die so angeordnet ist, dass sie das Arbeitsfluid zumindest bis zu einer ersten Kammer (4) und einer zweiten Kammer (5) leitet, wobei ein erstes Ende (6) der Spule (2) gegenüber der ersten Kammer (4) liegt und ein zweites Ende (7) der Spule (2), das dem ersten Ende (6) gegenüberliegt, der zweiten Kammer (5) zugewandt ist, und wobei das erste Ende (6) eine erste Stirnfläche (A1) aufweist, die einer ersten Schubkraft (F1) des Arbeitsfluides ausgesetzt ist, die in der ersten Kammer (4) vorhanden sein kann, die größer als eine zweite Stirnfläche (A2) des zweiten Endes (7) ist, die einer zweiten Schubkraft (F2) des Arbeitsfluides ausgesetzt ist, die in der zweiten Kammer (5) vorhanden sein kann, so dass sich die Spule (2) zu der zweiten Kammer (5) bewegt, wenn das Steuerungsmittel (8) nicht aktiv ist.

2. Ventil (1) nach Anspruch 1, welches ein Mittel zum Erzeugen eines Druckabfalls (11) des Arbeitsfluides aufweist, das entlang des Wegs des Arbeitsfluides in Richtung der ersten Kammer (4) in einer Position stromaufwärts zu der ersten Kammer (4) angeordnet ist.

3. Ventil nach Anspruch 2, wobei das Mittel zum Erzeugen eines Druckabfalls (11) des Arbeitsfluides angeordnet ist, um einen Druckabfall des Arbeitsfluides zu erzeugen, der größer als der Druckabfall ist, der durch das Steuermittel (8) erzeugt wird, so dass die Strömungsrate des Arbeitsfluides, das aus der ersten Kammer (4) austritt, auf eine solche Weise größer als die Strömungsrate des Arbeitsfluides ist, das in die erste Kammer (4) eintritt, dass die zweite Schubkraft (F2) des Arbeitsfluides, die in der zweiten Kammer (5) vorhanden ist, die erste Schubkraft (F1) des Arbeitsfluides übersteigt, das in der ersten Kammer (4) vorhanden ist, und die Spule (2) sich zu der ersten Kammer (4) bewegt, wenn das Steuerungsmittel (8) aktiv ist.

4. Ventil nach Anspruch 2 oder 3, wobei das Mittel zum Erzeugen eines Druckabfalls (11) des Arbeitsfluides als eine Verengung des Durchgangabschnitts des Arbeitsfluides durch die Hauptleitung (30) ausgebildet ist.

5. Ventil nach einem der vorhergehenden Ansprüche, wobei in der ersten Kammer (4) eine Steueröffnung (18) erhalten wird, durch die das Arbeitsfluid in der ersten Kammer (4) das Steuerungsmittel (8) erreichen kann.

6. Ventil nach einem der vorhergehenden Ansprüche, bei dem das Steuerungsmittel (8) ein elektromagnetisch angetriebenes Zweiwege- und Zweistellungs-Steuerventil umfasst.

7. Ventil nach einem der vorhergehenden Ansprüche, welches ein elastisches Mittel (12) aufweist, das in der ersten Kammer (4) in Kontakt mit dem ersten Ende (6) untergebracht ist, um eine Schubwirkung auf den ersten vorderen Bereich (A1) auszuüben.

8. Ventil nach einem der vorhergehenden Ansprüche, welches eine Vielzahl an Leitungen (22) aufweist, von denen jede eine Öffnung der Einlassöffnung (P1) und der Auslassöffnung (P2) und der mindestens zwei Paare der Anschlüsse (C1, C4; C2, C3) mit der Vielzahl an Durchgängen (3) verbindet.

9. Ventil nach Anspruch 8, welches ein Ablassmittel (23) aufweist, das angeordnet ist, um eine Ablasskammer (21) in Verbindung mit der Auslassöffnung (P2) anzuordnen, um jegliches Arbeitsfluid, das in der Ablasskammer (21) vorhanden ist, an die Auslassöffnung (P2) abzuleiten.

10. Ventil nach einem der Ansprüche 7 bis 9, welches eine Verriegelungsvorrichtung (31; 31') aufweist, die zum Halten der Spule (2) verriegelt ist, wenn die Spule (2) in einer ersten Betriebskonfiguration (B) und in einer zweiten Betriebskonfiguration (D) angeordnet ist, wobei die Verriegelungsvorrichtung (31; 31') die Spule (2) in der erwarteten Position hält und verhindert, dass der Druck des Fluides in der ersten und der zweiten Kammer (4, 5) und die elastische Kraft von dem elastischen Mittel (12), die auf die Spule (2) wirken, die Spule (2) weg von der Position bewegen, die die Spule (2) jeweils in der ersten Betriebskonfiguration (B) und in der zweiten Betriebskonfiguration (D) einnimmt.

11. Ventil nach einem der Ansprüche 1 bis 6 oder nach Anspruch 8 oder 9, wobei die zweite Kammer (5) kein elastisches Mittel aufweist, das zum Betrieb gegenüber dem Steuermittel (8) ausgestaltet ist.

## Revendications

1. Vanne de déviation d'écoulement (1) comprenant:
- un orifice d'entrée (P1) et un orifice de refoulement (P2) configurés pour être respectivement raccordés à des moyens d'alimentation et à des moyens de collecte d'un fluide de fonctionnement,
- au moins deux paires d'orifices (C1, C4; C2, C3) destinées à être raccordés à des actionneurs (10, 20) respectifs, dans laquelle une seule paire d'orifices à la fois est raccordée par écoulement audit orifice d'entrée (P1) et audit orifice de refoulement (P2),
- un tiroir (2) dans lequel une pluralité de passages (3) sont réalisés qui sont agencés pour être traversés par le fluide de fonctionnement et configurés pour placer en communication lesdits orifice d'entrée (P1) et de refoulement (P2) alternativement avec l'une ou l'autre paire d'orifices desdites au moins deux paires d'orifices (C1, C4; C2, C3),
- des moyens de pilotage (8) qui peuvent être sélectivement activés pour déplacer ledit tiroir (2), **caractérisée en ce que** ladite pluralité de passages (3) comprend une conduite principale (30) agencée pour conduire le fluide de fonctionnement au moins jusqu'à une première chambre (4) et une seconde chambre (5), dans laquelle une première extrémité (6) dudit tiroir (2) fait face à ladite première chambre (4) et une seconde extrémité (7) dudit tiroir (2), opposée à ladite première extrémité (6), fait face à ladite seconde chambre (5), et ladite première extrémité (6) a une première surface frontale (A1) exposée à une première force de poussée (F1) du fluide de fonctionnement qui peut être présent dans ladite première chambre (4) qui est plus grande qu'une seconde surface frontale (A2) de ladite seconde extrémité (7) exposée à une seconde force de poussée (F2) du fluide de fonctionnement qui peut être présent dans ladite seconde chambre (5), de sorte que lorsque lesdits moyens de pilotage (8) ne sont pas actifs, ledit tiroir (2) se déplace jusqu'à ladite seconde chambre (5).

2. Vanne (1) selon la revendication 1, comprenant des moyens pour créer une chute de pression (11) dudit fluide de fonctionnement, positionnés le long du trajet du fluide de fonctionnement dirigé vers ladite première chambre (4) dans une position en amont de ladite première chambre (4).

3. Vanne selon la revendication 2, dans laquelle lesdits moyens pour créer une chute de pression (11) dudit fluide de fonctionnement sont agencés pour générer une chute de pression du fluide de fonctionnement qui est supérieure à la chute de pression générée par lesdits moyens de pilotage (8), de sorte que le débit de fluide de fonctionnement quittant ladite première chambre (4) est supérieur au débit de fluide de fonctionnement pénétrant dans ladite première chambre (4) de telle manière que la seconde force de poussée (F2) du fluide de fonctionnement qui est présent dans ladite seconde chambre (5) excède la première force de poussée (F1) du fluide de fonctionnement qui est présent dans ladite première chambre (4) et ledit tiroir (2) se déplace jusqu'à ladite première chambre (4) lorsque lesdits moyens de pilotage (8) sont actifs.

4. Vanne selon la revendication 2 ou 3, dans laquelle lesdits moyens pour créer une chute de pression (11) dudit fluide de fonctionnement sont configurés comme un rétrécissement de la section de passage du fluide de fonctionnement à travers ladite conduite principale (30).

5. Vanne selon l'une quelconque des revendications précédentes, dans laquelle dans ladite première chambre (4), un orifice de pilotage (18) est obtenu à travers lequel le fluide de fonctionnement dans ladite première chambre (4) peut atteindre lesdits moyens de pilotage (8).

6. Vanne selon l'une quelconque des revendications précédentes, dans laquelle lesdits moyens de pilotage (8) comprennent une vanne de pilotage à deux positions et bidirectionnelle entraînée de manière électromagnétique.

7. Vanne selon l'une quelconque des revendications précédentes, comprenant des moyens élastiques (12) qui sont logés dans ladite première chambre (4) en contact avec ladite première extrémité (6) pour exercer une action de poussée sur ladite première surface frontale (A1).

8. Vanne selon l'une quelconque des revendications précédentes, comprenant une pluralité de conduites (22), chacune reliant un orifice parmi lesdits orifices d'entrée et de refoulement (P1, P2) et lesdites au moins deux paires d'orifices (C1, C4; C2, C3) avec ladite pluralité de passages (3).

9. Vanne selon la revendication 8, comprenant des moyens d'évacuation (23) agencés pour mettre une chambre d'évacuation (21) en communication avec ledit orifice de refoulement (P2) de manière à évacuer ledit orifice de refoulement (P2) de tout fluide de fonctionnement qui est présent dans la chambre d'évacuation (21).

10. Vanne selon l'une quelconque des revendications 7 à 9, comprenant un dispositif de verrouillage (31; 31') configuré pour maintenir ledit tiroir (2) verrouillé lorsque ledit tiroir (2) est positionné dans une première configuration de fonctionnement (B) et dans une seconde configuration de fonctionnement (D), dans laquelle ledit dispositif de verrouillage (31; 31') maintient ledit tiroir (2) dans la position attendue et empêche que la pression du fluide dans lesdites première et seconde chambres (4, 5) et la force élastique desdits moyens élastiques (12) agissant sur le tiroir (2) éloignent ledit tiroir (2) de la position que ledit tiroir (2) prend respectivement dans ladite première configuration de fonctionnement (B) et dans ladite seconde configuration de fonctionnement (D).

11. Vanne selon l'une quelconque des revendications 1 à 6, ou selon la revendication 8 ou 9, dans laquelle ladite seconde chambre (5) est dépourvue de moyens élastiques configurés pour fonctionner en opposition aux-dits moyens de pilotage (8).
